# FASCICULE DE BREVET EUROPEEN

(11) **EP 0 847 894 B1**
(45) Date de publication et mention de la délivrance du brevet: **02.05.2003**
(21) Numéro de dépôt: 97403057.9
(22) Date de dépôt: 16.12.1997
(51) Int. Cl.: B60Q 1/068, F21V 14/04

(54) **Projecteur de véhicule automobile équipé de moyens de réglage de réflecteur perfectionnés**
Fahrzeugscheinwerfer mit Einstelleinrichtung des Reflektors
Vehicle headlight with reflector control device

(30) Priorité: 16.12.1996 FR 9615420; 16.12.1996 FR 9615422
(43) Date de publication de la demande: 17.06.1998
(60) Demande divisionnaire: 02016471.1
(73) Titulaire: VALEO VISION, 93000 Bobigny (FR)
(72) Inventeur: Duchenne, Laurent, 94000 Creteil (FR); Loiselet, Jean-Pierre, 94000 Creteil (FR); Grigorescu, Benony, 94000 Creteil (FR)
(74) Mandataire: Le Forestier, Eric

(56) Documents cités:
- EP-A- 0 562 581
- FR-A- 1 560 011
- FR-A- 2 009 672
- FR-A- 2 254 956
- FR-A- 2 559 108
- PATENT ABSTRACTS OF JAPAN vol. 8, no. 73 (M-287) [1510] , 5 avril 1984 & JP 58 218441 A (HONDA GIKEN KOGYO KK)

## Description

La présente invention a trait d'une façon générale aux projecteurs, notamment projecteurs de complément, pour véhicules automobiles.

Une paire de projecteurs de complément est généralement prévue dans les véhicules de milieu de gamme ou de haute gamme et intégrés par exemple dans le bouclier avant du véhicule. Il s'agit le plus souvent de projecteurs longue portée ou antibrouillard.

Un projecteur selon la préambule de la revendication 1 est connu du document EP-A-0 562 581.

Généralement, on conçoit un type de projecteur de complément commun à différents types de véhicules, en faisant en sorte que les moyens de montage du projecteur puissent s'adapter aussi aisément que possible à différents types de véhicules.

A cet égard, il est nécessaire d'équiper ce type de projecteur de moyens de réglage de faisceau, en particulier en site, ceci afin de faire face au fait que les projecteurs après montage sont susceptibles d'occuper différentes orientations, selon les véhicules dans lesquels ils sont montés.

De façon conventionnelle, de tels moyens de réglage comportent un organe pouvant être manoeuvré soit manuellement, soit électriquement, de manière à faire basculer le réflecteur, portant la lampe, autour d'un axe, dans une gamme angulaire définie par des butées de déplacement soit du réflecteur lui-même, soit de l'organe de réglage.

Un inconvénient des moyens connus de réglage réside en ce qu'un opérateur maladroit ou incompétent risquera, lorsqu'un point de butée sera rencontré sans qu'un réglage satisfaisant ait été trouvé, de forcer sur l'organe de réglage pour aboutir à une déformation irréversible d'une pièce définissant le point de butée, ou encore purement et simplement à sa rupture.

La présente invention vise à proposer un dispositif de réglage qui, tout en permettant des réglages précis dans un intervalle angulaire bien déterminé, évite le problème précité.

Ainsi la présente invention propose un projecteur de véhicule automobile tel que défini dans la revendication 1.

Des aspects préférés, mais non limitatifs, du projecteur selon l'invention sont définis dans les revendications dépendantes.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est une vue en coupe verticale axiale d'un projecteur selon l'invention,
la figure 2 est une vue en coupe horizontale axiale du projecteur de la figure 1,
la figure 3 est une vue en coupe verticale axiale à échelle agrandie d'une forme de réalisation d'un dispositif de réglage du projecteur des figures 1 et 2,
la figure 4 est une vue de dessus d'un organe de réglage du dispositif de réglage de la figure 3, et
la figure 5 est une vue partielle en coupe transversale selon la ligne V de la figure 3.

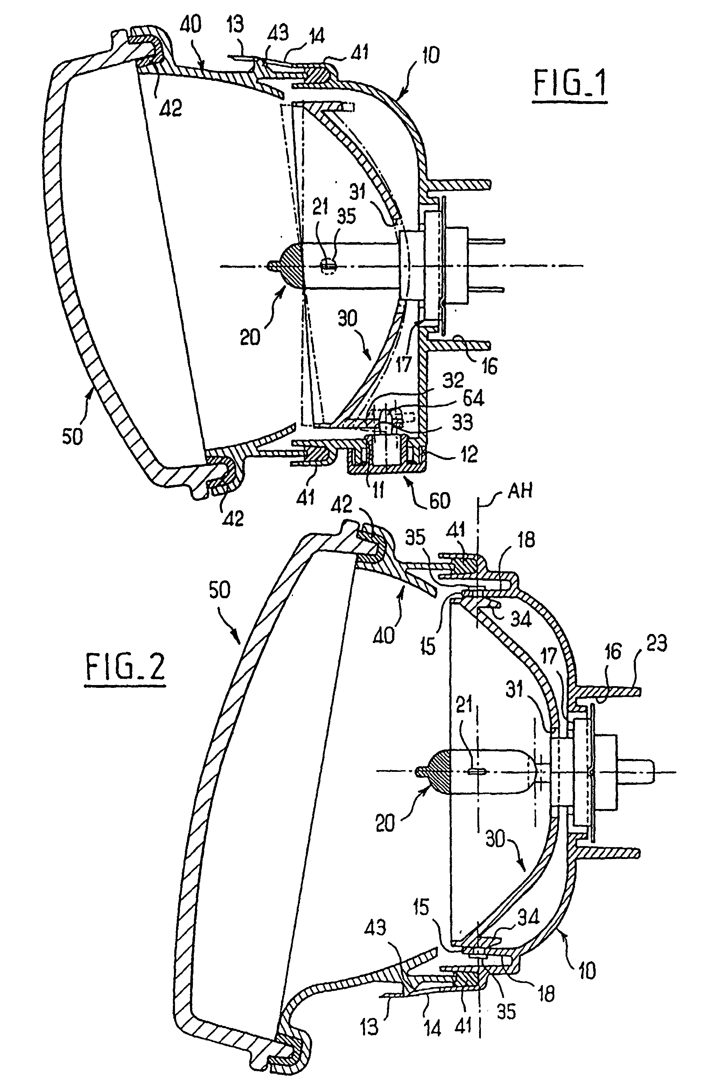

En référence au dessin, et tout d'abord aux figures 1 et 2, on a représenté un projecteur de complément pour véhicule automobile.

Ce projecteur comprend un boîtier postérieur 10, une glace frontale 50 et une pièce intermédiaire annulaire 40 reliant de façon étanche le boîtier et la glace. A cet effet, deux joints d'étanchéité périphériques 41, 42 sont interposés, pour l'un entre des aménagements à nervure et gorge formés respectivement sur la pièce intermédiaire 40 et le boîtier 10, et pour l'autre entre des aménagements à nervure et gorge formés respectivement sur la glace 50 et sur la pièce intermédiaire 40. La pièce intermédiaire 40 est fixée sur le boîtier, en comprimant le joint 41, à l'aide de dents d'encliquetage élastique 43 venues de matière sur la pièce 40 et s'accrochant dans des ouvertures 14 prévues dans des prolongements 13 du boîtier dirigés vers l'avant, à l'extérieur de la gorge recevant le joint 41.

On notera ici que, de façon avantageuse, la pièce 40 peut à elle seule comporter tous les moyens de fixation du projecteur dans le véhicule. De la sorte, lorsqu'un projecteur selon l'invention devra être installé dans des véhicules de types différents, nécessitant des moyens de fixation adaptés, il suffit de prévoir une pièce 40 appropriée au véhicule considéré, et tous les autres composants du projecteur peuvent rester identiques.

On diminue ainsi le nombre de pièces référencées, et donc le coût de fabrication.

Les pièces 10, 40, 50 définissent un espace fermé qui abrite un réflecteur 30 et une lampe 20. La lampe 20 est reliée à un porte-lampe (non représenté) monté fixement et de façon étanche à l'aide d'un joint dans une cavité cylindrique 16 formée à l'arrière du boîtier 10 et débouchant dans ledit espace fermé par une ouverture 17 traversée par la lampe 20.

Optionnellement, on prévoit autour de la lampe un occulteur (non représenté) destiné à ce que le rayonnement issu du filament ne puisse ailleurs que vers le réflecteur 30.

Le réflecteur 30 n'est pas solidaire de la lampe, et comporte une ouverture de fond 31 destinée à laisser passer celle-ci avec un jeu approprié, comme on le verra plus loin.

De façon avantageuse, le réflecteur est du type capable de former un faisceau de configuration souhaitée en projetant avec une répartition judicieuse les images du filament 21 de la lampe, et de préférence la glace 50 est non-déviatrice ou peu déviatrice.

Typiquement, le faisceau engendré est un faisceau antibrouillard, présentant une largeur substantielle et délimité par une coupure généralement horizontale, ou encore un faisceau longue-portée, avec une forte pointe de concentration lumineuse dans l'axe.

Les documents FR-A-2 536 503, FR-A-2 600 024, FR-A-2 602 305, FR-A-2 609 146, FR-A-2 639 888 et FR-A-2 664 677, tous au nom de la Demanderesse, donnent des exemples de telles surfaces réfléchissantes. On utilise de préférence une surface telle que décrite dans l'un des documents FR-A-2 639 888 et FR-A-2 664 677 ou comportant une combinaison des surfaces susmentionnées.

Un projecteur tel que décrit ci-dessus, tout particulièrement lorsqu'il s'agit d'un projecteur de complément, doit autoriser un réglage de la hauteur du faisceau qu'il engendre, ceci d'une part afin de permettre son montage avec des orientations différentes dans différents types de véhicules, et d'autre part afin de compenser les éventuelles tolérances de fabrication et les éventuels jeux de montage.

Selon un aspect de l'invention, le réflecteur est monté de façon articulée autour d'un axe horizontal AH (voir figure 2) qui, de façon préférée, passe par le centre du filament en intersectant l'axe optique du réflecteur.

A cet effet, le réflecteur 30 comporte au niveau de ses bords latéraux deux ailes rentrantes 34 de rigidification, à partir desquelles font saillie vers l'extérieur respectivement deux pions cylindriques coaxiaux 35.

Le boîtier 10 comporte quant à lui deux membrures 18 dirigées vers l'avant et comportant des encoches 15 dans lesquelles les pions 35 sont reçus étroitement, mais sans blocage, pour assurer le montage du réflecteur dans le boîtier de telle sorte qu'il puisse basculer autour de l'axe AH, confondu avec les axes des deux pions 35.

De façon avantageuse, la forme des encoches 15 est telle que le montage du réflecteur 30 sur le boîtier s'effectue par un phénomène d'encliquetage élastique des pions 35 dans lesdites encoches. De façon également avantageuse, les pions 35 comportent des têtes élargies 35a permettant d'emprisonner, suivant la direction de l'axe AH, les membrures 18 entre lesdites têtes 35a et les ailes 34 du réflecteur.

Comme on l'a indiqué plus haut, l'ouverture 31 formée dans le fond du réflecteur 30 pour le passage libre de la lampe est dimensionnée de manière à éviter que ladite lampe fasse obstacle au basculement du réflecteur dans une gamme angulaire déterminée, par exemple de ±5° de part et d'autre de l'horizontale.

Le projecteur selon l'invention comporte également un dispositif de réglage de la position angulaire du seul réflecteur 30, de manière à positionner le faisceau engendré à la hauteur souhaitée.

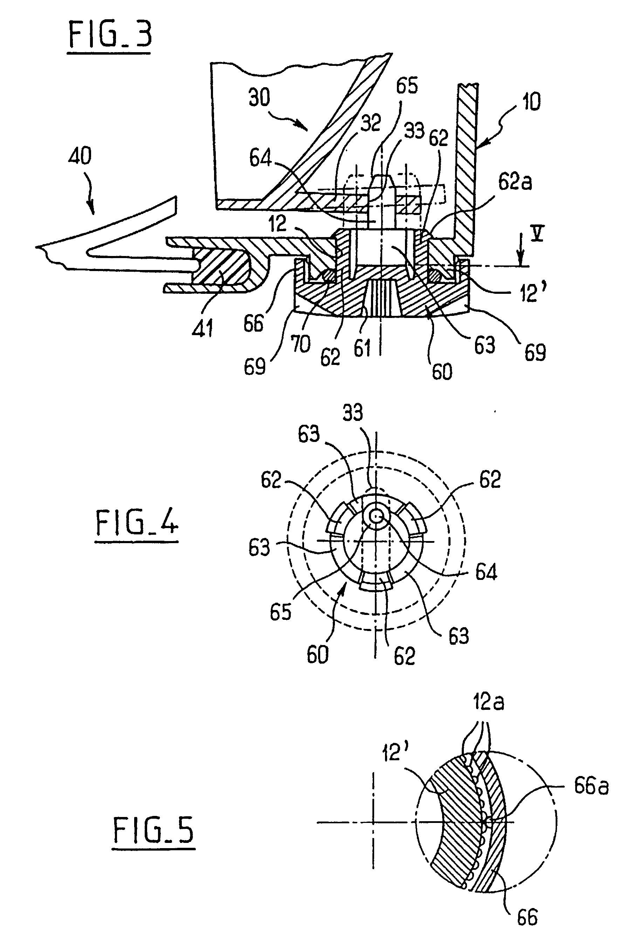

Dans le présent exemple, et comme représenté plus en détail sur les figures 3 à 5, ce dispositif comporte, côté réflecteur 30, une membrure plate essentiellement horizontale 32 s'étendant vers l'arrière à partir du bord inférieur du réflecteur et dans laquelle est pratiquée une fente oblongue dont le grand axe s'étend parallèlement à l'axe AH.

Le dispositif comporte également un organe de manoeuvre et d'entraînement, globalement désigné par la référence 60, qui présente la forme générale d'un bouchon à collerette extérieure encliqueté et reçu de façon pivotante dans une ouverture circulaire formée dans la paroi inférieure du boîtier 10.

Plus précisément, le boîtier comporte une ouverture circulaire 12 entourée par une nervure annulaire 12' en saillie vers le bas, et à la surface libre de laquelle est formé un siège en coin pour un joint torique d'étanchéité 70.

L'organe 60 comporte quant à lui une partie principale de contour circulaire, plus épaisse en son centre, à la surface extérieure de laquelle est formée une empreinte 61 pour un outil de réglage (par exemple une empreinte à six pans hexagonaux, ou encore une empreinte de type "Torx" ou cruciforme). Dans la surface extérieure de l'organe 60 sont également ménagées, à sa périphérie, des encoches 69 destinées, par sollicitation généralement tangentielle à l'aide de la pointe d'un tournevis ou analogue, à permettre le réglage du réflecteur à partir de l'arrière, de l'avant ou du côté du projecteur.

A partir de cette partie principale s'étend vers le haut une jupe annulaire constituée par trois pattes 62, élastiquement déformables vers l'intérieur et pourvues au niveau de l'extérieur de leur bord libre de dents d'accrochage 62a, et par trois parties fixes 63 s'étendant entre les parties formant pattes 62 et séparées d'elles par des fentes radiales étroites.

L'organe 60 comporte, autour de la partie formant jupe, une surface s'étendant radialement et apte, lors de sa mise en place se terminant par l'encliquetage élastique des pattes 62 dans l'ouverture 12 du boîtier, à comprimer le joint torique 70 dans son siège.

L'organe 60 comprend en outre un rebord périphérique rentrant 66 entourant la nervure annulaire 12' du boîtier.

Enfin l'organe 60 comprend un pion saillant 64 s'étendant vers le haut à partir du bord libre de l'une des parties fixes 63 de la jupe, c'est-à-dire de façon excentrée par rapport à l'axe de rotation de l'organe 60, ce pion étant destiné, lors du montage de l'organe 60, à pénétrer dans la fente oblongue 33 du réflecteur. On notera que l'extrémité en biseau 65 du pion 64 facilite cette pénétration.

On comprend que la rotation de l'organe 60 à l'aide d'un outil coopérant avec son empreinte 61 provoque le déplacement du point bas du réflecteur horizontalement sur la figure 3, et donc le basculement du réflecteur 30 autour de son axe de basculement AH, le pion 64 glissant dans la fente 33 lors de ces mouvements. L'excentricité du pion 64 par rapport à l'axe de rotation de l'organe 60 est choisie de manière à pouvoir effectuer ce basculement dans un intervalle angulaire approprié, par exemple ±5°.

Afin d'éviter tout déréglage intempestif du réflecteur, on prévoit des moyens pour résister à la rotation intempestive de l'organe 60 lorsqu'il est libéré de l'outil de réglage.

Une première solution consiste à concevoir l'organe 60 et la partie avoisinante du boîtier de telle sorte que l'organe 60 tourne avec frottement doux, la valeur de ce frottement étant choisie pour garantir la stabilité à terme du réglage tout en offrant à l'outil de réglage un couple résistant qui ne soit pas excessif.

Une autre solution est illustrée sur la figure consiste à prévoir tout le long de la périphérie cylindrique de la nervure annulaire 12' des bossages 12a de profil par exemple semi-circulaire, légèrement espacés les uns des autres. Le rebord rentrant 66 de l'organe 60 comporte quant à lui un bossage unique 66a de profil semi-circulaire, qui est en appui élastique contre les bossages 12a pour constituer un mécanisme de crantage qui crée une résistance à la rotation intempestive de l'organe 60, tout en définissant autant de positions de réglage stables qu'il y a de bossages 12a.

Bien entendu, d'autres solutions peuvent être imaginées.

Un avantage du dispositif de réglage décrit ci-dessus est qu'il est capable d'effectuer un réglage très fin de l'orientation du réflecteur 30 dans la gamme angulaire souhaitée, tout en ne comportant aucune butée de fin de course ou analogue susceptible de se détériorer ou de se rompre si l'opérateur excerce sur l'organe 60 de sollicitations excessives.

Comme on l'a décrit plus haut, le réflecteur, lors du réglage, bascule autour d'un axe qui passe au proche voisinage du filament de la lampe.

Comme on l'a également indiqué, le réflecteur est préférentiellement du type capable de créer un faisceau lumineux par une répartition judicieuse des images projetées du filament.

Il est clair que, pour atteindre cet objectif, la position du filament doit être déterminée avec une précision suffisante, faute de quoi le faisceau est très sensiblement dégradé.

Or on comprend aisément que, si l'axe de basculement AH du réflecteur 30 est tel que défini ci-dessus, le basculement du réflecteur conduit, vu dudit réflecteur, à un simple basculement relatif du filament sur la gamme angulaire de réglage, en l'occurrence sur ±5°, qui s'avère parfaitement compatible avec l'obtention d'un faisceau de bonne qualité.

En particulier, les basculements résultants de certaines images du filament ne vont pas notablement affecter la photométrie du faisceau, abstraction faite de son décalage en hauteur, tant les décalages sont minimes.

Bien entendu, de légers écarts de l'axe de basculement AH sont admissibles. En outre, même lorsque la position du foyer de référence du réflecteur par rapport au filament varie (selon la conception du réflecteur), on prévoit avantageusement que l'axe AH reste au voisinage du milieu du filament en direction axiale, de manière à limiter le déplacement relatif du filament, vu du réflecteur, lorsque ce dernier bascule.

En particulier, un projecteur selon la présente invention peut être utilisé avec des types de lampes très différents, et notamment avec des lampes normalisées H7, H1, H8 ou encore 9xxx (lampes utilisées aux Etats-Unis d'Amérique).

## Revendications

1. Projecteur de véhicule automobile, du type comprenant un boîtier (10), une source lumineuse (20) et un réflecteur (30) montés dans le boîtier, et une glace (50), le réflecteur étant monté basculant autour d'un axe (AH) et le projecteur comportant en outre un dispositif de réglage (32, 33, 60) destiné à déplacer une partie du réflecteur située à distance de l'axe de basculement dans une direction donnée essentiellement transversale audit axe de basculement, le dispositif de réglage comporte un organe de manoeuvre rotatif (60) portant une partie d'entraînement (64) disposée excentriquement par rapport à son axe de rotation, **caractérisé en ce que** ladite partie d'entraînement étant reçue de manière à pouvoir coulisser essentiellement sans jeu dans une fente (33) formée dans un élément (32) solidaire du réflecteur (30) et orientée essentiellement transversalement à l'axe de l'organe rotatif et à ladite direction de déplacement, et **en ce que** ledit organe rotatif (60) peut tourner librement sur lui-même sur plus de 360°.

2. Projecteur selon la revendication 1, **caractérisé en ce que** l'axe de basculement (AH) du réflecteur est horizontal, **en ce que** l'axe de rotation de l'organe de manoeuvre (60) est vertical, et **en ce que** la fente (33) s'étend dans une direction horizontale essentiellement parallèle audit axe de basculement.

3. Projecteur selon la revendication 2, **caractérisé en ce que** l'organe de manoeuvre (60) est monté dans une ouverture (12) formée dans la paroi inférieure du boîtier (10).

4. Projecteur selon la revendication 3, **caractérisé en ce que** la fente (33) est formée dans une membrure (32) s'étendant vers l'arrière à partir de la base du réflecteur (30).

5. Projecteur selon l'une des revendications 1 à 4, **caractérisé en ce que** l'organe de manoeuvre (60) traverse une ouverture (12) formée dans le boîtier, et comporte une pluralité de pattes d'encliquetage (62) s'étendant, en profil, le long d'un cercle.

6. Projecteur selon la revendication 5, **caractérisé en ce que** la partie d'entraînement (64) est formée sur une jupe essentiellement rigide (63) s'étendant entre deux pattes d'encliquetage (62).

7. Projecteur selon l'une des revendications 1 à 6, **caractérisé en ce que** le boîtier (10) et l'organe de manoeuvre (60) comportent deux surfaces en vis-à-vis, présentant des profils circulaires concentriques, **en ce que** l'une des surfaces comporte une pluralité de bossages (12a) faiblement espacés les uns des autres, et **en ce que** l'autre surface comporte au moins un bossage (66a) apte à occuper une position stable entre deux bossages de l'autre surface et à franchir lesdits bossages de l'autre surface par déformation élastique.

8. Projecteur selon la revendication 7, **caractérisé en ce que** l'une des surfaces est une face intérieure d'un rebord périphérique rentrant (66) de l'organe de manoeuvre, et l'autre surface est une face extérieure d'une nervure sortante (12') formée sur le boîtier.

9. Projecteur selon la revendication 8, **caractérisé en ce que** ladite nervure sortante (12') définit un siège pour un joint d'étanchéité (70).

10. Projecteur selon l'une des revendications 1 à 9, **caractérisé en ce que** ledit organe de manoeuvre (60) comporte une surface extérieure essentiellement plane dans laquelle est formée une empreinte (61) pour un outil d'entraînement.

## Patentansprüche

1. Kraftfahrzeugscheinwerfer mit einem Gehäuse (10), einer Lichtquelle (20) und einem Reflektor (30), die beide im Gehäuse angebracht sind, und einer Abschlussscheibe (50), wobei der Reflektor um eine Achse (AH) schwenkbar montiert ist und der Scheinwerfer ferner eine Einstelleinrichtung (32, 33, 60) umfasst, die dazu bestimmt ist, einen von der Schwenkachse beabstandeten Teil des Reflektors in einer vorgegebenen, im Wesentlichen quer zur Schwenkachse verlaufenden Richtung zu verlagern, wobei die Einstelleinrichtung ein Drehstellmittel (60) umfasst, das ein Antriebsteil (64) trägt, das bezüglich dessen Drehachse exzentrisch angeordnet ist, **dadurch gekennzeichnet, dass** das Antriebsteil so aufgenommen ist, dass es im Wesentlichen spielfrei in einem Schlitz (33) gleiten kann, der in einem mit dem Reflektor (30) festverbundenen Element (32) gebildet und im Wesentlichen quer zur Achse des Drehmittels und zur Verlagerungsrichtung ausgerichtet ist, und dass sich das Drehmittel (60) ungehindert mehr als 360° um sich selbst drehen kann.

2. Scheinwerfer nach Anspruch 1,
**dadurch gekennzeichnet, dass** die Schwenkachse (AH) des Reflektors horizontal ist, und dass die Drehachse des Stellmittels (60) vertikal ist, und dass der Schlitz (33) in einer horizontalen Richtung im Wesentlichen parallel zur Schwenkachse verläuft.

3. Scheinwerfer nach Anspruch 2,
**dadurch gekennzeichnet, dass** das Stellmittel (60) in einer Öffnung (12) angebracht ist, die in der unteren Wand des Gehäuses (10) gebildet ist.

4. Scheinwerfer nach Anspruch 3,
**dadurch gekennzeichnet, dass** der Schlitz (33) in einer Trägerleiste (32) gebildet ist, die von der Basis des Reflektors (30) ausgehend nach hinten verläuft.

5. Scheinwerfer nach einem der Ansprüche 1 bis 4,
**dadurch gekennzeichnet, dass** das Stellmittel (60) eine im Gehäuse gebildete Öffnung (12) durchquert und eine Vielzahl von Rastarmen (62) umfasst, die im Querschnitt gesehen entlang eines Kreises verlaufen.

6. Scheinwerfer nach Anspruch 5,
**dadurch gekennzeichnet, dass** das Antriebsteil (64) auf einem im Wesentlichen steifen Mantel (63) ausgebildet ist, der zwischen zwei Rastarmen (62) verläuft.

7. Scheinwerfer nach einem der Ansprüche 1 bis 6,
**dadurch gekennzeichnet, dass** das Gehäuse (10) und das Stellmittel (60) zwei sich gegenüberliegende Seiten umfassen, die konzentrische, runde Profile aufweisen, dass eine der Seiten eine Vielzahl von Höckern (12a) umfasst, die untereinander geringfügig beabstandet sind, und dass die andere Seite wenigstens einen Höcker (66a) aufweist, der eine stabile Stellung zwischen zwei Höckern der anderen Seite einzunehmen und die Höcker der anderen Seite durch elastische Verformung zu überwinden vermag.

8. Scheinwerfer nach Anspruch 7,
**dadurch gekennzeichnet, dass** eine der Seiten eine Innenseite eines einspringenden Umfangsrands (66) des Stellmittels und die andere Seite eine Außenseite einer auf dem Gehäuse gebildeten vorstehenden Rippe (12') ist.

9. Scheinwerfer nach Anspruch 8,
**dadurch gekennzeichnet, dass** die vorstehende Rippe (12') einen Sitz für eine Dichtung (70) bildet.

10. Scheinwerfer nach einem der Ansprüche 1 bis 9
**dadurch gekennzeichnet, dass** das Stellmittel (60) eine im Wesentlichen ebene Außenseite umfasst, in der eine Vertiefung (61) für ein Antriebswerkzeug gebildet ist.

## Claims

1. Motor vehicle headlight of the type comprising a housing (10), a light source (20) and a reflector (30) mounted in the housing, and a glass (50), the reflector being mounted so as to tilt about an axis (AH) and the light also having an adjustment device (32, 33, 60) intended to move a part of the reflector situated at a distance from the tilting axis in a given direction essentially transverse to the said tilting axis, the adjustment device having a rotary manoeuvring member (60) carrying a drive part (64) disposed eccentrically with respect to its axis of rotation, **characterised in that** the said drive part is received so as to be able to slide essentially without play in a slot (33) formed in an element (32) fixed to the reflector (30) and oriented essentially transversely to the axis of the rotary member and to the said direction of movement, and **in that** the said rotary member (60) can turn freely on itself over more than 360°.

2. Headlight according to Claim 1, **characterised in that** the tilting axis (AH) of the reflector is horizontal, and **in that** the axis of rotation of the manoeuvring member (60) is vertical, and **in that** the slot (33) extends in a horizontal direction essentially parallel to the said tilting axis.

3. Headlight according to Claim 2, **characterised in that** the manoeuvring member (60) is mounted in an opening (12) formed in the bottom wall of the housing (10).

4. Headlight according to Claim 3, **characterised in that** the slot (33) is formed in a member (32) extending towards the rear from the base of the reflector (30).

5. Headlight according to one of Claims 1 to 4, **characterised in that** the manoeuvring member (60) passes through an opening (12) formed in the housing, and has a plurality of snapping-in lugs (62) extending, in profile, along a circle.

6. Headlight according to Claim 5, **characterised in that** the drive part (64) is formed on an essentially rigid skirt (63) extending between two snapping-in lugs (62).

7. Headlight according to one of Claims 1 to 6, **characterised in that** the housing (10) and the manoeuvring member (60) have two facing surfaces, having concentric circular profiles, **in that** one of the surfaces has a plurality of protrusions (12a) slightly spaced apart from each other, and **in that** the other surface has at least one protrusion (66a) able to occupy a stable position between two protrusions on the other surface and to pass over the said protrusions on the other surface by elastic deformation.

8. Headlight according to Claim 7, **characterised in that** one of the surfaces is an internal face of a re-entrant peripheral rim (66) of the manoeuvring member, and the other surface is an external face of a projecting rib (12') formed on the housing.

9. Headlight according to Claim 8, **characterised in that** the said projecting rib (12a) defines a seat for a sealing joint (70).

10. Headlight according to one of Claims 1 to 9, **characterised in that** the said manoeuvring member (60) has an essentially flat external surface in which there is formed an impression (61) for a drive tool.
